# EUROPEAN PATENT APPLICATION

(11) **EP 4 629 335 A1**
(43) Date of publication of application: **08.10.2025**
(21) Application number: 23897437.2
(22) Date of filing: 09.11.2023
(51) Int. Cl.: H01M 4/525, H01M 4/36, H01M 4/485, H01M 4/505

(54) **ELECTRODE ACTIVE MATERIAL FOR SECONDARY BATTERIES, AND SECONDARY BATTERY**

(30) Priority: 29.11.2022 JP 2022190556
(71) Applicant: Panasonic Intellectual Property Management Co., Ltd., Kadoma-shi, Osaka 571-0057 (JP)
(72) Inventor: ASAKA Keisuke, Kadoma-shi, Osaka 571-0057 (JP); SUZUKI Hirotetsu, Kadoma-shi, Osaka 571-0057 (JP)
(74) Representative: Novagraaf International SA
(86) International application number: PCT/JP2023/040450
(87) International publication number: WO 2024/116785

(57) **Abstract**

This electrode active material for secondary batteries includes an active material body and a carbonaceous film provided on the surface of the active material body. The carbonaceous film contains an aromatic ring.

## Description

### TECHNICAL FIELD

The present disclosure relates to an electrode active material for secondary batteries and to a secondary battery.

### BACKGROUND

In recent years, as a secondary battery having a high output and a high capacity, a secondary battery has been widely used, in which the secondary battery includes a positive electrode, a negative electrode, and an electrolyte, and performs charging and discharging by moving Li ions and the like between the positive electrode and the negative electrode.

For example, Patent Literatures 1 and 2 disclose the use of a composite in which a carbonaceous film is formed on the surface of an active material body as an active material for secondary batteries.

### CITATION LIST

### PATENT LITERATURE

Patent Literature 1: JP 2009-140876 A
Patent Literature 2: JP 2001-015111 A

### SUMMARY

An object of the present disclosure is to provide an electrode active material for secondary batteries capable of reducing battery resistance, and a secondary battery including the electrode active material for secondary batteries.

An electrode active material for secondary batteries according to one aspect of the present disclosure includes an active material body and a carbonaceous film provided on the surface of the active material body, and the carbonaceous film contains an aromatic ring.

A secondary battery according to one aspect of the present disclosure includes the electrode active material for secondary batteries.

According to one aspect of the present disclosure, battery resistance can be reduced.

### BRIEF DESCRIPTION OF DRAWINGS

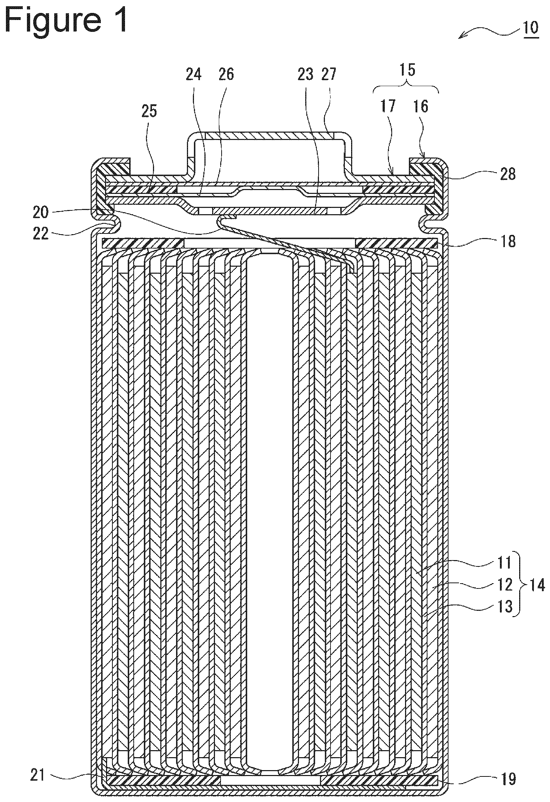

FIG. 1 is a cross-sectional view of a secondary battery according to an example of an embodiment.

### DESCRIPTION OF EMBODIMENTS

Hereinafter, an example of an embodiment of an electrode active material for secondary batteries according to the present disclosure will be described.

An electrode active material for secondary batteries according to the present embodiment includes an active material body and a carbonaceous film provided on the surface of the active material body, and the carbonaceous film contains an aromatic ring. By forming the carbonaceous film containing an aromatic ring on the surface of the active material body, the electron conductivity of the electrode active material for secondary batteries can be improved, so that the battery resistance of the secondary battery can be reduced.

The electrode active material for secondary batteries according to the present embodiment can be applied to both a positive electrode active material and a negative electrode active material, but is preferably applied to at least a positive electrode active material. When the electrode active material for secondary batteries according to the present embodiment is applied to a positive electrode active material, a positive electrode active material body is applied to the active material body. Also, when the electrode active material for secondary batteries according to the present embodiment is applied to a negative electrode active material, a negative electrode active material body is applied to the active material body.

### (Active material body)

The active material body occludes and releases ions such as lithium ions during charging and discharging. **In** the case of a positive electrode active material body, generally, ions are occluded during discharging, and ions are released during charging. **In** the case of a negative electrode active material body, generally, ions are released during discharging, and ions are occluded during charging.

Examples of the positive electrode active material body include lithium transition metal composite oxides containing transition metal elements such as Co, Mn, and Ni. The lithium transition metal composite oxide has, for example, a layered rock salt structure belonging to a space group R-3m, a space group C2/m, and the like. From the viewpoint of higher capacity, stability of a crystal structure, and the like, the lithium transition metal composite oxide preferably has a layered rock salt structure belonging to the space group R-3m. The layered rock salt structure of the lithium transition metal composite oxide may include a transition metal layer, a Li layer, and an oxygen layer.

The content of Co in the lithium transition metal composite oxide is preferably less than or equal to 5 mol%, more preferably less than or equal to 2 mol%, still more preferably less than or equal to 1 mol%, and particularly preferably 0.1 mol% with respect to the total number of moles of metal elements excluding Li. Since Co is a rare metal and is expensive, it is preferable to reduce the usage amount of Co. When the content of Co decreases, the electron conductivity of the lithium transition metal composite oxide may decrease, but by providing a carbonaceous film containing an aromatic ring on the surface of the lithium transition metal composite oxide, a positive electrode active material having high electron conductivity is obtained, so that battery resistance can be reduced.

The lithium transition metal composite oxide may be represented by, for example, a general formula LiₐNi_{1-x-y}MnₓM_{y}O_{2+b}. In the formula, it is preferable to satisfy 0.9 ≤ a ≤ 1.1, 0 ≤ x ≤ 0.5, 0 ≤ y ≤ 0.1, 0.5 ≤ 1-x-y ≤ 0.95, and -0.05 ≤ b ≤ 0.05. In the formula, an element M is an element other than Li, Ni, Mn, and oxygen. Note that a value of "a" that indicates the molar ratio of lithium is increased or reduced by charging and discharging. The element M is preferably at least one type selected from the group consisting of Co, Nb, Al, Zr, B, Fe, Cu, Zn, Sn, W, Mo, Si, Ti, Fe, and Cr from the viewpoint of, for example, stability of the crystal structure of the lithium transition metal composite oxide.

The content of the elements constituting the lithium transition metal composite oxide can be measured by an inductively coupled plasma atomic emission spectroscopy (ICP-AES), an electron probe microanalyzer (EPMA), or the like.

Examples of the negative electrode active material body include carbon materials such as graphite, metals and alloys such as Si and Sn, metal compounds containing Si and Sn, and metal oxides having a lithium element. Examples of the graphite include natural graphite such as scale-like graphite, massive graphite, and earthy graphite, and artificial graphite such as massive artificial graphite and graphitized mesophase carbon microbeads. Examples of the Si-containing metal compound include a Si-containing compound represented by SiOₓ (0.5 ≤ x ≤ 1.6) and a Si-containing compound in which Si fine particles are dispersed in a lithium silicate phase represented by Li_{2y}SiO_{(2+y)} (0 < y < 2). Examples of the metal oxides having a lithium element include lithium titanate (Li₄Ti₅O₁₂ and the like).

In the negative electrode active material body, a material other than the carbon material (hereinafter, a non-carbon-based material) may have lower electron conductivity than, for example, a carbon-based material. However, by providing a carbonaceous film containing an aromatic ring on the surface of the non-carbon-based material, a negative electrode active material having high electron conductivity is obtained, so that battery resistance can be reduced. Note that a carbonaceous film containing an aromatic ring may be provided on the surface of the carbon material. Even in such a form, the electron conductivity of the negative electrode active material is enhanced, so that battery resistance can be reduced.

### (Carbonaceous film containing aromatic ring)

The carbonaceous film containing an aromatic ring may be present in a spotted manner to cover at least a part of the surface of the active material body, or may be present to cover the entire surface of the active material body. The surface of the active material body means, for example, the surface of the secondary particles of the active material body when the active material body is composed of secondary particles formed by aggregation of primary particles. That is, the carbonaceous film containing an aromatic ring is present on the surfaces of the secondary particles of the active material body. Also, the carbonaceous film may be present not only on the surfaces of the secondary particles but also on the surfaces of the primary particles inside the secondary particles. Moreover, when the active material body contains a single particle (primary particle), a carbonaceous film containing an aromatic ring may be provided on the surface of the single particle. Note that the active material body may be composed of only single particles (primary particles), only secondary particles formed by aggregation of primary particles, or mixed particles of single particles and secondary particles.

From the viewpoint of enhancing the electron conductivity of the electrode active material, the carbonaceous film containing an aromatic ring preferably contains at least one of an alkali metal excluding Li and an alkaline earth metal, and the alkali metal preferably contains at least one of Na and K. In addition, the carbonaceous film containing an aromatic ring preferably contains S from the viewpoint of enhancing the electron conductivity of the electrode active material. Note that the carbonaceous film may contain Li. The aromatic ring in the carbon film can be confirmed by an evolved gas analysis device (EGA-MS). Also, the presence of S in the carbonaceous film can be confirmed by energy dispersive X-ray spectroscopy (TEM-EDX). The presence of alkali metals such as Na and K and alkaline earth metals in the carbonaceous film can be confirmed by X-ray photoelectron spectroscopy (XPS).

A thickness of the carbonaceous film is, for example, less than or equal to 30 nm. A lower limit value of the thickness of the carbonaceous film is, for example, 1 nm. The thickness of the carbonaceous film is measured by an image of a cross section of the electrode active material observed by a transmission electron microscope (TEM).

Hereinafter, an example of a method for forming a carbonaceous film containing an aromatic ring on the surface of the active material body will be described.
(1) A surfactant containing an aromatic ring is dissolved in water to produce an aqueous solution.
(2) Powder of the active material body is added to the aqueous solution, and the mixture is stirred to adjust a suspension in which the active material body is dispersed in the aqueous solution.
(3) By firing the residue obtained by filtering the suspension, a carbonaceous film containing an aromatic ring can be formed on the surface of the active material body.

The surfactant containing an aromatic ring is preferably an anionic surfactant. As a result, for example, the surfactant is easily adsorbed on the surface of the active material body in water, and a substantially uniform carbonaceous film can be produced. The surfactant is not particularly limited as long as it contains an aromatic ring. The surfactant preferably contains at least one of an alkali metal excluding Li and an alkaline earth metal, and the alkali metal preferably contains at least one of Na and K. Also, the surfactant preferably contains S. Examples of the surfactant containing an aromatic ring include sodium dodecylbenzenesulfonate and potassium dodecylbenzenesulfonate. The concentration of the surfactant in the aqueous solution is, for example, greater than or equal to 0.1 mass% and less than or equal to 10 mass%, and preferably greater than or equal to 1 mass% and less than or equal to 5 mass%.

Hereinafter, an example of an embodiment of a secondary battery according to the present disclosure will be described.

FIG. 1 is a cross-sectional view of a secondary battery of an example of an embodiment. The secondary battery 10 illustrated in FIG. 1 includes a wound electrode assembly 14 formed by winding a positive electrode 11 and a negative electrode 12 with a separator 13 interposed between the positive electrode 11 and the negative electrode 12, an electrolyte, insulating plates 18 and 19 that are disposed on upper and lower sides of the electrode assembly 14, respectively, and a battery case 15 housing the above-described members. The battery case 15 includes a bottomed cylindrical case body 16 and a sealing assembly 17 for closing an opening of the case body 16. Note that, instead of the wound electrode assembly 14, an electrode assembly having another form, such as a stacked electrode assembly in which positive electrodes and negative electrodes are alternately stacked with separators interposed therebetween, may be applied. Examples of the battery case 15 include metal cases having a cylindrical shape, a square shape, a coin shape, a button shape, and the like, and resin cases (so-called laminated type) formed by laminating a resin sheet.

The electrolyte has, for example, ion conductivity (for example, lithium ion conductivity). The electrolyte may be a liquid electrolyte (electrolytic solution) or a solid electrolyte.

The liquid electrolyte (electrolytic solution) contains, for example, a non-aqueous solvent and an electrolyte salt dissolved in the non-aqueous solvent. Examples of the non-aqueous solvent include esters, ethers, nitriles, amides, and mixed solvents of two or greater thereof. Examples of the non-aqueous solvent include ethylene carbonate (EC), ethyl methyl carbonate (EMC), dimethyl carbonate (DMC), diethyl carbonate (DEC), and mixed solvents thereof. The non-aqueous solvent may contain a halogen-substituted product (for example, fluoroethylene carbonate or the like) in which at least a part of hydrogen in these solvents is substituted with a halogen atom such as fluorine. As the electrolyte salt, for example, a lithium salt such as LiPF₆ is used.

As the solid electrolyte, for example, a solid or gel polymer electrolyte, an inorganic solid electrolyte, or the like can be used. The polymer electrolyte contains, for example, a lithium salt and a matrix polymer or contains, for example, a non-aqueous solvent, a lithium salt, and a matrix polymer. As the matrix polymer, for example, a polymer material that absorbs a non-aqueous solvent and gelates is used. Examples of the polymer material include a fluororesin, an acrylic resin, and a polyether resin. As the inorganic solid electrolyte, for example, a material (for example, an oxide-based solid electrolyte, a sulfide-based solid electrolyte, a halogen-based solid electrolyte, or the like) known for all-solid-state lithium ion secondary batteries and the like can be used. The electrolyte exemplified above is a non-aqueous electrolyte, but the electrolyte is not limited to the non-aqueous electrolyte, and may be an aqueous electrolyte.

The case body 16 is, for example, a cylindrical metal container with a bottom. A gasket 28 is provided between the case body 16 and the sealing assembly 17 to ensure airtightness within the battery. The case body 16 has a projecting portion 22 in which, for example, a part of a side surface portion of the case body 16 projects inward to support the sealing assembly 17. The projecting portion 22 is preferably formed in an annular shape along the circumferential direction of the case body 16, and supports the sealing assembly 17 on its top surface.

The sealing assembly 17 has a structure in which a filter 23, a lower vent member 24, an insulating member 25, an upper vent member 26, and a cap 27 are stacked sequentially from the electrode assembly 14 side. Each member constituting the sealing assembly 17 has, for example, a disk shape or a ring shape, and the members excluding the insulating member 25 are electrically connected to each other. The lower vent member 24 and the upper vent member 26 are connected to each other at their central portions, and the insulating member 25 is interposed between the circumferential portions of the lower vent member 24 and the upper vent member 26. When the internal pressure of the secondary battery 10 increases due to heat generated by an internal short circuit or the like, for example, the lower vent member 24 deforms so as to push the upper vent member 26 up toward the cap 27 side and breaks, so that a current path between the lower vent member 24 and the upper vent member 26 is cut off. When the internal pressure further increases, the upper vent member 26 breaks, and gas is discharged from an opening of the cap 27.

In the secondary battery 10 illustrated in FIG. 1, a positive electrode lead 20 attached to the positive electrode 11 extends to the sealing assembly 17 side through a through hole of the insulating plate 18, and a negative electrode lead 21 attached to the negative electrode 12 extends to the bottom side of the case body 16 through the outside of the insulating plate 19. The positive electrode lead 20 is connected to a bottom surface of the filter 23, which is the bottom plate of the sealing assembly 17, by welding or the like, and the cap 27, which is electrically connected to the filter 23 and is the top plate of the sealing assembly 17, serves as a positive electrode terminal. The negative electrode lead 21 is connected to the bottom inner surface of the case body 16 by welding or the like, and the case body 16 serves as a negative electrode terminal.

Hereinafter, the positive electrode 11, the negative electrode 12, and the separator 13 will be described.

### [Positive Electrode]

The positive electrode 11 includes, for example, a positive electrode current collector and a positive electrode mixture layer formed on the surface of the positive electrode current collector. The positive electrode mixture layer is preferably formed on both surfaces of the positive electrode current collector. As the positive electrode current collector, a foil of a metal such as aluminum or an aluminum alloy which is stable in a potential range of the positive electrode 11, a film in which the metal is disposed on the surface layer thereof, or the like can be used. The positive electrode mixture layer contains a positive electrode active material. The positive electrode mixture layer may contain a binding agent, a conductive agent, or the like. The positive electrode 11 can be produced by, for example, applying a positive electrode mixture slurry including the positive electrode active material, the conductive agent, the binding agent, and the like to the surface of the positive electrode current collector, drying a coating film, and then rolling the coating film using a roller or the like.

Examples of the conductive agent contained in the positive electrode mixture layer include carbon materials such as carbon black, acetylene black, Ketjenblack, graphene, carbon nanotube, carbon nanofiber, and graphene. The content of the conductive agent is, for example, greater than or equal to 0.01 mass% and less than or equal to 10 mass%, preferably greater than or equal to 0.1 mass% and less than or equal to 5 mass% with respect to the total mass of the positive electrode mixture layer.

Examples of the binding agent contained in the positive electrode mixture layer include fluorine-containing resins such as polytetrafluoroethylene (PTFE) and polyvinylidene fluoride (PVDF), polyacrylonitrile (PAN), polyimide, acrylic resins, polyolefin, styrene-butadiene rubber (SBR), nitrile-butadiene rubber (NBR), carboxymethyl cellulose (CMC) or a salt thereof, polyacrylic acid (PAA) or a salt thereof, polyvinyl alcohol (PVA), and polyethylene oxide (PEO). The content of the binding agent is, for example, greater than or equal to 0.1 mass% and less than or equal to 10 mass%, preferably greater than or equal to 0.5 mass% and less than or equal to 5 mass% with respect to the total mass of the positive electrode mixture layer.

The positive electrode active material contained in the positive electrode mixture layer preferably contains, for example, a positive electrode active material in which the carbonaceous film containing an aromatic ring is provided on the surface of the positive electrode active material body (hereinafter, may be referred to as the positive electrode active material of the present embodiment). The positive electrode active material body is, for example, the lithium transition metal composite oxide described above.

The lithium transition metal composite oxide includes, for example, secondary particles formed by aggregation of primary particles. The particle diameter of each of the primary particles forming the secondary particles of the lithium transition metal composite oxide is, for example, greater than or equal to 0.02 µm and less than or equal to 2 µm. The particle diameter of each of the primary particles is measured as a diameter of a circumscribed circle in a particle image observed by a scanning electron microscope (SEM). The average particle size of the secondary particles of the lithium transition metal composite oxide is, for example, greater than or equal to 2 µm and less than or equal to 30 µm. Here, the average particle diameter means a volume-based median diameter (D50). D50 means a particle diameter in which the cumulative frequency in a volume-based particle size distribution is 50% from the smallest particle size, and is also referred to as a median diameter. The particle size distribution of the secondary particles of the lithium transition metal composite oxide can be measured using a laser diffraction type particle size distribution measuring apparatus (for example, MT3000II manufactured by MicrotracBEL Corp.) using water as a dispersion medium.

The positive electrode mixture layer may contain other positive electrode active materials in place of or in combination with the positive electrode active material of the present embodiment. Examples of other positive electrode active materials include a lithium transition metal composite oxide having no carbonaceous film on the surface thereof. When the positive electrode active material of the present embodiment is used, the content of the positive electrode active material of the present embodiment is preferably greater than or equal to 90 mass%, and more preferably greater than or equal to 99 mass%, with respect to the total mass of the positive electrode active material.

### [Negative Electrode]

The negative electrode 12 includes, for example, a negative electrode current collector and a negative electrode mixture layer formed on the surface of the negative electrode current collector. The negative electrode mixture layer is preferably formed on both surfaces of the negative electrode current collector. As the negative electrode current collector, a foil of a metal such as copper or a copper alloy which is stable in a potential range of the negative electrode 12, a film in which the metal is disposed on the surface layer thereof, or the like can be used. The negative electrode mixture layer contains a negative electrode active material. The negative electrode mixture layer may contain a binding agent or the like. The negative electrode 12 can be produced by, for example, applying a negative electrode mixture slurry including the negative electrode active material, the binding agent, and the like to the surface of the negative electrode current collector, drying a coating film, and then rolling the coating film using a roller or the like.

The negative electrode active material contained in the negative electrode mixture layer may contain, for example, a negative electrode active material in which the carbonaceous film containing an aromatic ring is provided on the surface of the negative electrode active material body (hereinafter, may be referred to as the negative electrode active material of the present embodiment). **In** addition, the negative electrode mixture layer may contain other negative electrode active materials in place of or in combination with the negative electrode active material of the present embodiment. Examples of other negative electrode active materials include carbon materials and non-carbon materials having no carbonaceous film on the surface thereof. When the negative electrode active material of the present embodiment is used, the content of the negative electrode active material of the present embodiment is preferably greater than or equal to 90 mass%, and more preferably greater than or equal to 99 mass%, with respect to the total mass of the negative electrode active material.

Examples of the binding agent contained in the negative electrode mixture layer include materials similar to those for the positive electrode 11. The content of the binding agent is, for example, greater than or equal to 0.1 parts by mass and less than or equal to 10 parts by mass, preferably greater than or equal to 0.5 parts by mass and less than or equal to 5 parts by mass, with respect to 100 parts by mass of the negative electrode active material. The negative electrode mixture layer may contain a conductive agent. Examples of the conductive agent include those similar to those for the positive electrode 11. The content of the conductive agent is, for example, greater than or equal to 0.01 mass% and less than or equal to 10 mass%, preferably greater than or equal to 0.1 mass% and less than or equal to 5 mass% with respect to the total mass of the negative electrode mixture layer.

### [Separator]

As the separator 13, for example, a porous sheet having ion permeability and insulating properties is used. Specific examples of the porous sheet include a microporous thin film, a woven fabric, and a nonwoven fabric. As a material of the separator, polyolefin such as polyethylene and polypropylene, cellulose, and the like are suitable. The separator 13 may be a laminate including a cellulose fiber layer and a thermoplastic resin fiber layer such as an olefin-based resin. Further, the separator 13 may be a multi-layer separator including a polyethylene layer and a polypropylene layer, and a separator obtained by applying a material such as an aramid-based resin or ceramic to the surface of the separator 13 may be used.

### EXAMPLES

Hereinafter, the present disclosure will be further described with reference to Example and Comparative Examples, but the present disclosure is not limited to the following Example.

### [Production of Positive Electrode Active Material]

### <Example>

An aqueous solution was prepared by dissolving 5 mass% of sodium lauryl sulfate and 0.5 mass% of sodium dodecylbenzenesulfonate as a surfactant containing an aromatic ring in water. A lithium transition metal composite oxide having a median diameter (D50) of 17 µm and a composition of LiNi_{0.8}Mn_{0.2}O₂ (positive electrode active material body) was added to the aqueous solution, and the mixture thereof was stirred for 5 minutes to prepare a suspension having a concentration of 1000 g/L. A residue obtained by filtering the suspension was vacuum-dried at 80°C for 10 hours and then fired at 200°C for 5 hours, thereby obtaining a positive electrode active material of Example. As a result of observation by a transmission electron microscope (TEM), a thickness of a carbonaceous film formed on the surface of the lithium transition metal composite oxide was 10 nm. In addition, as a result of analyzing the components of the positive electrode active material of Example using an evolved gas analysis device (EGA) (heat extraction apparatus: trade name PY-3030D manufactured by Frontier Laboratories Ltd., GC/MS apparatus: trade name GC-Agilent 7890A manufactured by Agilent Technologies Japan, Ltd., Jms-Q1000GC MK-II manufactured by JEOL Ltd.), the presence of aromatic rings could be confirmed. That is, it can be said that the aromatic ring remains in the carbonaceous film formed by heat-treating the surfactant containing an aromatic ring.

### [Production of Positive Electrode]

100 parts by mass of the positive electrode active material, 1.1 parts by mass of acetylene black as a conductive agent, and 0.9 parts by mass of polyvinylidene fluoride as a binding agent were mixed, and the mixture thereof was mixed with N-methyl-2 pyrrolidone (NMP) to prepare a positive electrode mixture slurry. Subsequently, the positive electrode mixture slurry was applied to one surface of a positive electrode current collector made of an aluminum foil having a thickness of 15 µm, a coating film was dried, the coating film was rolled by a rolling roller, and then the coating film was cut into a predetermined electrode size to produce a positive electrode for evaluation. The positive electrode was provided with a region to function as a positive electrode of 20 mm × 20 mm and a connection region with a lead of 5 mm × 5 mm. Thereafter, the positive electrode mixture layer formed on the connection region was further scraped off to expose the positive electrode current collector. Thereafter, an exposed portion of the positive electrode current collector was connected to a positive electrode lead, and a predetermined region on the outer periphery of the positive electrode lead was covered with an insulating film.

### [Production of Negative Electrode]

A negative electrode was produced by bonding a lithium metal foil (thickness: 300 µm) to one surface of an electrolytic copper foil serving as a negative electrode current collector. Thereafter, the negative electrode was cut into a shape similar to the shape of the positive electrode, thereby obtaining a negative electrode for evaluation. The lithium metal foil formed on the connection region formed was peeled off similarly to the positive electrode to expose the negative electrode current collector. Thereafter, similarly to the positive electrode, an exposed portion of the negative electrode current collector was connected to a negative electrode lead, and a predetermined region on the outer periphery of the negative electrode lead was covered with an insulating film.

### [Preparation of Non-Aqueous Electrolyte]

Ethylene carbonate (EC), ethyl methyl carbonate (EMC), and dimethyl carbonate (DMC) were mixed at a volume ratio of 20 : 5 : 75. Lithium hexafluorophosphate (LiPF₆) was dissolved in the mixed solvent to have a concentration of 1.3 mol/liter, thereby preparing a non-aqueous electrolyte (non-aqueous electrolytic solution).

### [Production of Battery for Evaluation]

A battery for evaluation was produced using a positive electrode and a negative electrode for evaluation. First, the positive electrode and the negative electrode were disposed to face each other with a separator interposed therebetween so that a positive electrode mixture layer and a negative electrode mixture layer overlap each other, thereby obtaining an electrode plate group. Next, an Al laminate film (thickness: 100 µm) cut into a rectangular shape of 60 × 90 mm was folded in half, and an end on a long side of 60 mm was thermally sealed at 230°C, thereby forming a cylindrical shape of 60 × 45 mm. Thereafter, the produced electrode plate group was placed in the cylinder, and the positions of the end surface of the Al laminate film and the insulating film of each lead were aligned with each other and thermally sealed at 230°C. Next, 0.3 cm³ of a non-aqueous electrolytic solution was injected from the short side of the Al laminate film which was not thermally sealed, and after the injection, the Al laminate film was caused to stand still for 5 minutes under a reduced pressure of 0.06 MPa, and each mixture layer was impregnated with the electrolytic solution. Finally, the end surface of the Al laminate film on the injected side was thermally sealed at 230°C to produce a battery for evaluation. A battery for evaluation was produced under a dry environment with a dew point less than or equal to -50°C.

### [Evaluation of Direct Current Internal Resistance (DCIR)]

Under a temperature environment of 25°C, the battery was charged at a constant current of 0.2 C to 4.5 V, and then charged at a constant voltage of 4.5 V to 0.05 C. Thereafter, constant current discharge was performed at a constant current of 0.2 C until a cell voltage reached 2.5 V. The battery after the initial charging and discharging was subjected to constant current charging at 0.2 C in a temperature environment of 25°C until the state of charge (SOC) reached 50%. Thereafter, the battery was rested for 2 hours, and a resistance value was calculated from the voltage drop before and after discharging at a current of 0.3 C for 30 seconds, and defined as DCIR.

### <Comparative Example 1>

A battery was produced in the same manner as in Example except that sodium lauryl sulfate and sodium dodecylbenzenesulfonate were not used, and direct current resistance (DCIR) was evaluated.

### <Comparative Example 2>

A positive electrode active material was produced in the same manner as in Example except that sodium dodecylbenzenesulfonate was not used. That is, a carbonaceous film having no aromatic ring was formed on the surface of the positive electrode active material body. Then, a battery was produced in the same manner as in Example except that the positive electrode active material was used, and direct current resistance (DCIR) was evaluated.

The evaluation results of the direct current resistance (DCIR) of the batteries of Example and Comparative Examples 1 to 2 are shown in Table 1. In Table 1, the direct current resistances of other Example and Comparative Example 2 are shown as relative values, with the value of the direct current resistance of Comparative Example 1 as a reference (100).

**[Table 1]**

| | Carbonaceous film | DCIR |
|---|---|---|
| Example 1 | Aromatic-containing carbonaceous film | 58 |
| Comparative Example 1 | None | 100 |
| Comparative Example 2 | Aromatic-free carbonaceous film | 86 |

The battery of Example had lower DCIR than those of the batteries of Comparative Examples 1 to 2. Therefore, by using an electrode active material in which a carbonaceous film containing an aromatic ring is formed on the surface of the active material body, battery resistance can be reduced.

### [Supplementary Notes]

The present disclosure is further described by the following embodiments.

### Configuration 1:

An electrode active material for secondary batteries including an active material body and a carbonaceous film provided on the surface of the active material body, in which
the carbonaceous film contains an aromatic ring.

### Configuration 2:

The electrode active material for secondary batteries according to configuration 1, in which the active material body is a lithium transition metal composite oxide.

### Configuration 3:

The electrode active material for secondary batteries according to configuration 1 or 2, in which the carbonaceous film contains at least one of an alkali metal excluding Li and an alkaline earth metal.

### Configuration 4:

The electrode active material for secondary batteries according to any one of configurations 1 to 3, in which the carbonaceous film contains S.

### Configuration 5:

The electrode active material for secondary batteries according to configuration 3, in which the alkali metal contains at least one of Na and K.

### Configuration 6:

The electrode active material for secondary batteries according to configuration 2, in which a content of Co in the lithium transition metal composite oxide is less than or equal to 5 mol% with respect to a total number of moles of metal elements excluding Li.

### Configuration 7:

The electrode active material for secondary batteries according to any one of configurations 1 to 6, in which a thickness of the carbonaceous film is less than or equal to 30 nm.

### Configuration 8:

A secondary battery including a positive electrode, a negative electrode, and a non-aqueous electrolyte, in which
at least one of the positive electrode and the negative electrode contains the electrode active material for secondary batteries according to configuration 1.

### REFERENCE SIGNS LIST

- 10: Secondary battery
- 11: Positive electrode
- 12: Negative electrode
- 13: Separator
- 14: Electrode assembly
- 15: Battery case
- 16: Case body
- 17: Sealing assembly
- 18, 19: Insulating plate
- 20: Positive electrode lead
- 21: Negative electrode lead
- 22: Projecting portion
- 23: Filter
- 24: Lower vent member
- 25: Insulating member
- 26: Upper vent member
- 27: Cap
- 28: Gasket

## Claims

1. An electrode active material for secondary batteries comprising an active material body and a carbonaceous film provided on the surface of the active material body, wherein
the carbonaceous film contains an aromatic ring.

2. The electrode active material for secondary batteries according to claim 1, wherein the active material body is a lithium transition metal composite oxide.

3. The electrode active material for secondary batteries according to claim 1 or 2,
wherein the carbonaceous film contains at least one of an alkali metal excluding Li and an alkaline earth metal.

4. The electrode active material for secondary batteries according to claim 1 or 2,
wherein the carbonaceous film contains S.

5. The electrode active material for secondary batteries according to claim 3, wherein the alkali metal contains at least one of Na and K.

6. The electrode active material for secondary batteries according to claim 2, wherein a content of Co in the lithium transition metal composite oxide is less than or equal to 5 mol% with respect to a total number of moles of metal elements excluding Li.

7. The electrode active material for secondary batteries according to claim 1 or 2, wherein a thickness of the carbonaceous film is less than or equal to 30 nm.

8. A secondary battery comprising a positive electrode, a negative electrode, and a non-aqueous electrolyte, wherein
at least one of the positive electrode and the negative electrode contains the electrode active material for secondary batteries according to claim 1.
